# DEMANDE DE BREVET EUROPEEN

(11) **EP 1 213 654 A1**
(43) Date de publication de la demande: **12.06.2002**
(21) Numéro de dépôt: 01402901.1
(22) Date de dépôt: 13.11.2001
(51) Int. Cl.: G06F 13/24, G06F 13/42

(54) **Dispositif et procédé de traitement des interruptions dans une transmission d'informations sur un bus**

(30) Priorité: 21.11.2000 FR 0015011
(71) Demandeur: STMicroelectronics S.A., 92120 Montrouge (FR)
(72) Inventeur: Mariaud, Xavier, c/o Cabinet Ballot, 75116 Paris (FR); Klingelschmidt, Daniel, c/o Cabinet Ballot, 75116 Paris (FR)
(74) Mandataire: Ballot, Paul

(57) **Abrégé**

L'invention concerne les transferts de données entre un appareil Maître et un appareil Esclave (périphérique) et, plus particulièrement, des moyens en circuits et en logiciel pour ne pas perdre le début d'un nouveau message du fait de l'indisponibilité du microcontrôleur de l'appareil Esclave.
L'invention réside dans le fait qu'un signal d'interruption SOVR (70-80) est généré dans le cas où l'appareil Esclave a reçu et accusé réception (End-trans) d'un début de nouveau message "Setup" alors que le microcontrôleur est indisponible (CTR=1) car il traite le précédent message ou une application de l'appareil Esclave.

## Description

L'invention concerne le domaine des transmissions d'informations binaires sur un câble sous forme série et, plus particulièrement dans de telles transmissions, un dispositif et un procédé pour traiter les interruptions du microcontrôleur supervisant les opérations de transmission.

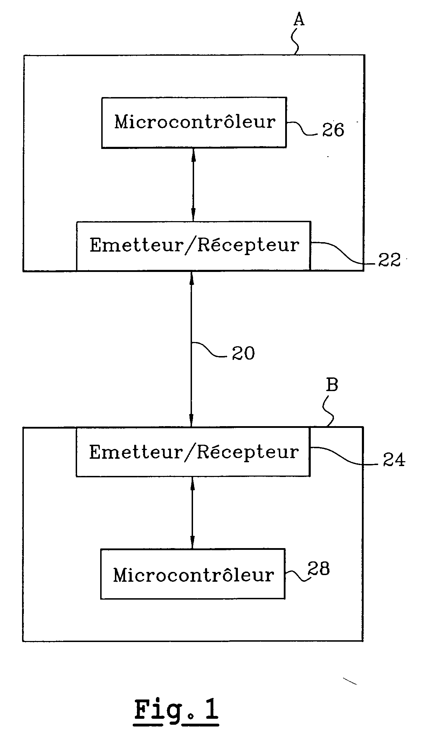

La transmission bilatérale d'informations binaires entre un appareil A (figure 1), appelé "Hôte" ou "Maître", et un appareil B, appelé "Périphérique" ou "Esclave" peut s'effectuer de différentes manières et, notamment, par l'intermédiaire d'un câble 20 à quatre conducteurs. Un premier conducteur est affecté à fournir une tension d'alimentation, un deuxième et un troisième conducteurs sont affectés à transmettre les signaux binaires et un quatrième est connecté au potentiel de la masse.

Les signaux binaires transmis par les deuxième et troisième conducteurs sont groupés sous forme de messages dont les formats sont fixés par des normes ou protocoles.

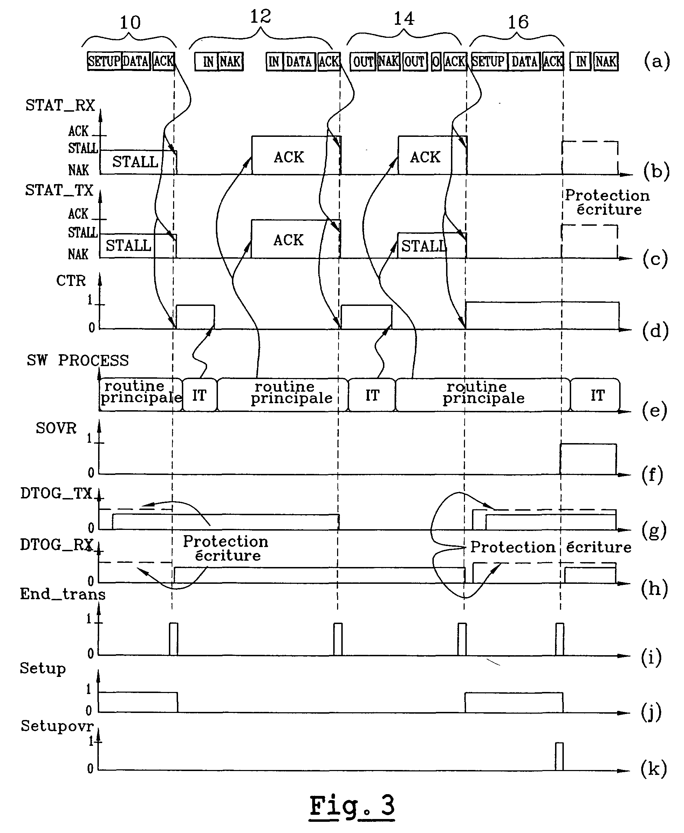

L'un de ces protocoles est celui connu sous l'acronyme "USB" pour l'expression anglo-saxonne "Universal Serial Bus". Dans le protocole USB, les transmissions ou transferts peuvent être de différents types et l'un d'entre eux, appelé "Commande de transfert", est constitué de trois transactions ou étapes :
- une étape de démarrage 10 (figure 3) durant laquelle l'appareil Maître A transmet à l'appareil Esclave B un message auquel le récepteur 24 de l'appareil Esclave répond par un Accusé Réception "ACK" (figure 3) lorsqu'il l'a bien reçu. Le message est composé d'une première partie "SETUP" indiquant le début d'une commande de lecture par exemple et d'une deuxième partie "DATA" contenant des données, indiquant le type de commande ;
- une étape de transfert de données 12 durant laquelle l'appareil Maître A envoie un message "IN" d'attente de réception de la donnée lue suite à la commande. Le microcontrôleur 28 de l'appareil Esclave n'étant pas disponible, il envoie un message NAK de fin de non-recevoir.
   Ultérieurement, l'appareil Maître A envoie une nouvelle fois le message IN auquel l'appareil Esclave répond alors en envoyant la donnée lue appelée DATA. L'appareil Maître retourne alors un Accusé-Réception ACK ;
- une étape dite d'état 14 durant laquelle l'appareil Maître envoie un message "OUT" sans être suivi de donnée qui indique la fin du transfert. Le microcontrôleur n'étant pas disponible, l'appareil esclave envoie un message NAK de fin de non-recevoir.

Ultérieurement, l'appareil Maître envoie une nouvelle fois le message "OUT" sans donnée auquel cas l'appareil Esclave répond par un Accusé-Réception ACK.

L'appareil Esclave est alors en possession de tout l'ensemble du message et le microcontrôleur peut alors le traiter.

Il apparaît que, pendant les différentes étapes du transfert 10, 12 et 14, il est prévu que l'appareil Maître répète sa partie de message "IN" ou "OUT" tant que le microcontrôleur est indisponible.

Dans le cas où l'étape qui suit concerne une étape de démarrage alors que le microcontrôleur est indisponible, il est prévu que l'appareil Esclave ne retourne aucun signal (pas de signal NAK, ni STALL, ni ACK), ce qui est interprété par l'appareil Maître comme une erreur de transmission, auquel cas, il envoie le message une nouvelle fois.

Un tel fonctionnement n'apparaît que si la durée d'indisponibilité du microcontrôleur est supérieure à l'intervalle de temps séparant deux messages consécutifs. Cependant, dans le cas de transfert de données à très grande vitesse, les intervalles de temps entre deux messages sont de plus en plus courts. Par ailleurs, le microcontrôleur de l'appareil Esclave assure de plus en plus de tâches de sorte que ses durées d'indisponibilité sont de plus en plus longues.

A la fin de chaque étape 10 ou 12 du transfert, il est prévu de requérir une interruption du microcontrôleur pour traiter la partie du message transmise. A cet effet, un drapeau CTR est mis à l'état "1" pour indiquer qu'une interruption est requise (figure 3-d).

Après un certain temps dépendant de l'application en cours, l'interruption demandée par le bus USB est traitée. A la fin de l'interruption, le programme exécuté par le microcontrôleur remet le drapeau CTR à l'état "0", ce qui autorise le transfert de la partie suivante du message.

Ensuite, une machine d'états logicielle traite les informations relatives à l'évènement du message USB extrait par la routine d'interruption.

De ce fonctionnement, il résulte qu'aucun transfert sur le bus USB n'est autorisé quand le drapeau est à l'état "1". Il y a donc dépendance entre le temps de traitement d'une interruption et le délai d'acceptation du transfert suivant, le temps de traitement de l'interruption découlant de la fréquence de fonctionnement du microcontrôleur.

Par ailleurs, le délai entre chaque transaction dépend de l'appareil Maître de sorte que si ce délai est inférieur au temps minimum de traitement de l'interruption par le microcontrôleur, le transfert suivant ne pourra pas être autorisé, ce qui pourra avoir pour conséquence l'échec de la transaction.

Un but de la présente invention est donc, dans un appareil Esclave commandé par un microcontrôleur, de réaliser un dispositif et de mettre en oeuvre un procédé qui permettent à la fin d'un message, de réceptionner le début du message suivant en présence d'une indisponibilité du microcontrôleur.

Ce dispositif et ce procédé s'adressent à résoudre le problème de la réception de la première partie d'un nouveau message alors que le microcontrôleur n'est pas disponible.

L'invention concerne un dispositif de traitement des interruptions dans un appareil Esclave B tel qu'un périphérique d'ordinateur qui est connecté à un appareil Maître A tel qu'un ordinateur par l'intermédiaire d'un câble à plusieurs conducteurs pour permettre l'échange d'informations binaires entre les deux appareils selon le protocole USB, ledit appareil Esclave comprenant:
- un circuit d'émission/réception des informations binaires reçues et émises sur le câble qui fournit des signaux,
- des circuits de commande de bascules d'états recevant les signaux du circuit d'émission/réception et fournissant des signaux d'états du circuit d'émission/réception,
- un microcontrôleur pour traiter les applications de l'appareil Esclave et, notamment, les informations binaires reçues et envoyées sur le câble, par l'intermédiaire du circuit d'émission/réception caractérisé en ce que ledit dispositif de traitement des interruptions comprend un circuit de commande d'une bascule d'état d'interruption de manière à fournir un signal d'interruption lorsque le circuit d'émission/réception a reçu le début d'un nouveau message, ledit début de message ayant été réceptionné et enregistré par ledit circuit d'émission/réception.

L'invention concerne également un procédé de traitement des interruptions dans un appareil Esclave, tel qu'un périphérique d'ordinateur, qui est connecté à un appareil Maître, tel qu'un ordinateur, par un câble à plusieurs conducteurs capable de fonctionner selon le protocole dit "USB", caractérisé en ce qu'il comprend les étapes suivantes consistant à :
(a) élaborer un signal d'état indiquant la fin d'un message,
(b) détecter le début d'un nouveau message en provenance de l'appareil Maître et élaborer un signal d'état de début de message,
(c) enregistrer les données contenues dans ce début de message,
(d) accuser réception de ce début de message,
(e) élaborer un signal indiquant la fin de l'étape (c),
(f) élaborer un signal d'interruption en présence des signaux de fin de message précédent, de début d'un nouveau message et de fin de l'étape (e).

D'autres caractéristiques et avantages de la présente invention apparaîtront à la lecture de la description suivante d'un exemple particulier de réalisation, ladite description étant faite en relation avec les dessins joints dans lesquels :
- la figure 1 est un schéma montrant deux appareils connectés par un câble de type USB,
- la figure 2 est un schéma montrant les circuits électroniques à réaliser pour mettre en oeuvre l'invention,
- les figures 3-a à 3-k sont des diagrammes temporels montrant le déroulement des opérations pour mettre en oeuvre l'invention,
- la figure 4 est un schéma d'une machine d'états pour mettre en oeuvre le protocole USB,
- la figure 5 est un diagramme montrant les différentes étapes d'une routine de traitement des interruptions USB, et
- la figure 6 est un diagramme montrant les étapes d'une boucle principale du programme USB exécuté par le microcontrôleur.

La figure 1 est un schéma simplifié montrant un appareil Maître A qui est connecté à un appareil Esclave B par l'intermédiaire d'un câble 20 à quatre conducteurs. Dans chaque appareil A et B, le câble est connecté à un dispositif d'émission/réception 22 et 24 qui effectue l'émission et la réception des signaux électriques binaires envoyés à/ou reçus de l'autre appareil sous forme série.

A la sortie du dispositif d'émission/réception 22 ou 24, les informations binaires transmises sont disponibles sous forme parallèle pour être traitées par un microcontrôleur ou microprocesseur 26 ou 28.

Le dispositif et le procédé selon l'invention concernent l'appareil Esclave B et, plus particulièrement, le traitement de l'arrivée d'un nouveau message d'informations binaires alors que le microcontrôleur 28 est indisponible pour les traiter.

Comme on l'a indiqué dans le préambule des présentes, dans les systèmes actuels, la première partie 16 (figure 3) du message suivant est perdue. Le système actuel prévoit bien que l'appareil Maître répète ce début de message mais ce dernier ne pourra être effectivement enregistré que lorsque le microcontrôleur sera à nouveau disponible, c'est-à-dire qu'il répondra positivement à la requête de l'appareil Maître, d'où une perte de temps importante.

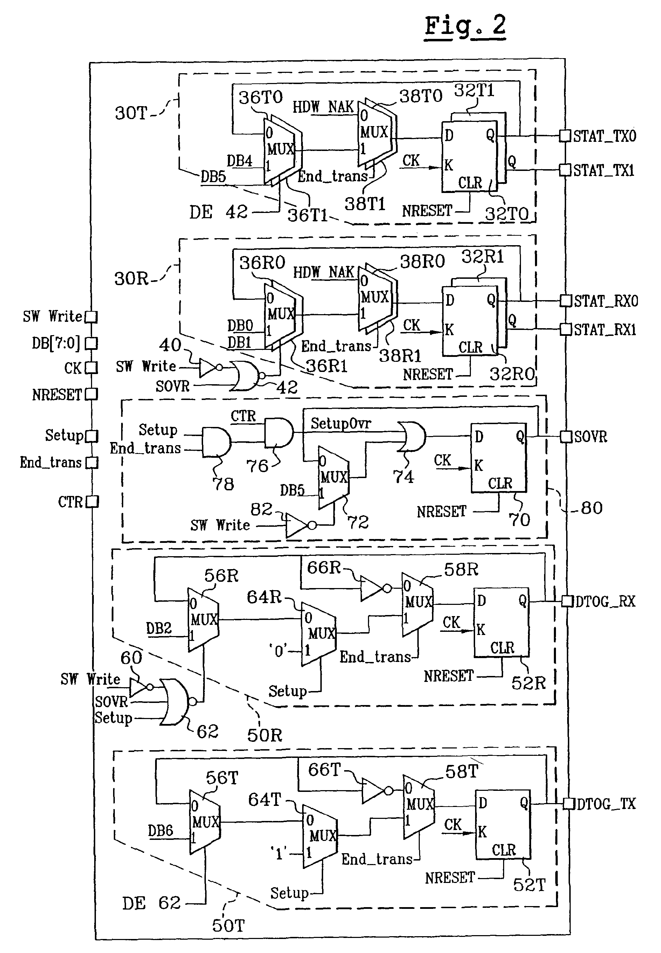

Dans le système actuel, le dispositif comprend (figure 2) les circuits englobés dans les boîtes en tirets référencés 30R, 30T, 50R et 50T.

Chaque boîte 30R ou 30 T comprend deux bascules d'états du type D 32R0, 32R1 ou 32T0, 32T1 qui définissent quatre états selon le tableau I.

**TABLEAU I**

| **BASCULES 32R1 32T1** | **BASCULES 32R0 32T0** | **SIGNIFICATION** |
|---|---|---|
| 0 | 0 | DISABLED : Le périphérique ne peut remplir aucune fonction et les messages reçus sont ignorés. |
| 0 | 1 | STALL : Le périphérique est arrêté ou ne supporte pas le type de requête reçue et toutes les requêtes aboutissent à une réponse STALL. |
| 1 | 0 | NAK : Toutes les requêtes aboutissent à une fin de non-recevoir NAK car le périphérique n'est pas prêt. |
| 1 | 1 | VALID : Le périphérique est prêt à recevoir une transaction. |

Ces bascules changent d'état en fonction du signal appliqué sur la borne d'entrée D mais au moment de l'impulsion d'horloge CK appliquée sur la borne d'entrée K. Elles sont remises à l'état "0" par un signal NRESET sur la borne d'entrée CLR.

Les signaux appliqués sur la borne d'entrée D d'une bascule 32R0/32R1 (ou 32T0/32T1) proviennent du bus DB du microcontrôleur 28 via deux multiplexeurs, l'un 36R0/36R1 (ou 36T0/36T1) commandé par un signal "SW Write" fourni par le programme du microcontrôleur 28 et l'autre 38R0/38R1 (ou 38T0/38T1) commandé par un signal "End-trans" fourni par le dispositif d'émission/réception 24 du périphérique.

La borne de sortie du multiplexeur 36R0/36R1 (ou 36T0/36T1) est connectée à une borne d'entrée du multiplexeur 38R0/38R1 (ou 38T0/38T1), l'autre borne d'entrée recevant un signal HDW NAK du dispositif d'émission/réception.

Dans l'état actuel, le signal "SW Write" est appliqué au multiplexeur 36R0/36R1 (ou 36T0/36T1) via un circuit inverseur 40 uniquement.

Le bus DB comprend huit conducteurs numérotés DB0, DB1, ..., DB7, les conducteurs DB0, DB1, DB4 et DB5 étant connectés respectivement aux bornes d'entré "1" des multiplexeurs 36R0, 36R1, 36T0 et 36T1.

Selon l'invention, le circuit est modifié pour l'appliquer via le circuit inverseur 40 et un circuit "OU" inverseur 42 dont l'autre borne d'entrée reçoit un signal "SOVR" fourni par la borne de sortie Q d'une bascule 70 de type D d'un circuit 80 selon l'invention.

Chaque boîte 50R (ou 50T) selon l'art antérieur comprend une bascule 52R (ou 52T) de type D. Ces bascules 52R et 52T indiquent l'un des deux types de jeton de données "DATA 1" ou "DATA 0" qui va être reçu ou transmis, DATA 1 étant attendu lorsque DTOG-Rx ou DTOG-Tx est à "1" et "DATA 0" étant attendu lorsque DTOG-Rx ou DTOG-Tx est à "0". Par ailleurs, les données qui se succèdent doivent se présenter dans un ordre tel que DATA 1 alterne avec DATA 0, ce qui permet une vérification des données et une resynchronisation.

Les signaux de commande des bascules 52R (ou 52T) sur les bornes d'entrée D proviennent du bus DB du microcontrôleur via trois multiplexeurs 56R, 64R et 58R (ou 56T, 64 T et 58T), l'un 56R (ou 56T) commandé par le signal "SW Write", l'autre 64R (ou 64T) commandé par un signal "Setup" et le dernier 58R (ou 58T) commandé par le signal "End trans". Le maintien en l'état de la bascule 52R (ou 52T) est obtenu par le retour sur une entrée des multiplexeurs 56R (ou 56T) et 58R (ou 58T), directement pour le multiplexeur 56R (ou 56T) ou via un circuit inverseur 66R (ou 66T) pour le multiplexeur 58R (ou 58T).

Les conducteurs DB2 et DB6 du bus DB sont connectés respectivement aux bornes d'entrée "1" des multiplexeurs 56R et 56T.

La borne de sortie du multiplexeur 56R (ou 56T) est connectée à une borne d'entrée du multiplexeur 64R (ou 64T) dont l'autre borne d'entrée reçoit du microcontrôleur un signal d'état "1" pour la bascule 52T en transmission et un signal d'état "0" pour la bascule 52R en réception. La bascule 52T est affectée à la transmission tandis que la bascule 52R est affectée à la réception.

Dans l'art antérieur, le signal "SW Write" est appliqué, via le circuit inverseur 60, au multiplexeur 56R (ou 56T) mais dans l'invention, il passe par l'intermédiaire d'un circuit OU inverseur 62 qui comprend deux autres bornes d'entrée, l'une pour recevoir le signal SOVR fourni par la bascule 70 du circuit 80 et l'autre pour recevoir le signal "Setup".

Le circuit 80, qui doit être mis en oeuvre pour réaliser l'invention, comprend, outre la bascule 70 de type D, un multiplexeur 72 dont une borne d'entrée est connectée au conducteur DB5 du bus DB du microcontrôleur et dont l'autre borne d'entrée est connectée à la borne de sortie Q de la bascule 70 pour la maintenir en l'état. Le multiplexeur 72 est commandé par le signal SW Write via un circuit inverseur 82.

La borne de sortie du multiplexeur 72 est connectée à l'une des deux bornes d'entrée d'un circuit OU 74 dont la borne de sortie est connectée à la borne d'entrée D de la bascule 70. L'autre borne d'entrée du circuit OU 74 est connectée à la borne de sortie d'un circuit ET 76. Ce circuit 76 a deux bornes d'entrée, l'une recevant un signal CTR et l'autre étant connectée à la borne de sortie d'un circuit ET 78 à deux bornes d'entrées, l'une recevant le signal End-trans et l'autre recevant le signal Setup.

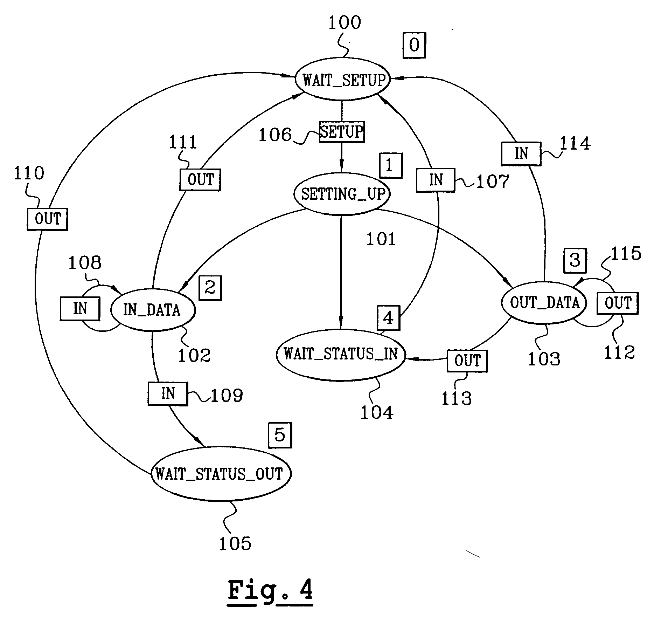

Le traitement des messages échangés entre l'appareil Maître A et l'appareil Esclave B est réalisé par une machine d'états qui sera décrite en relation avec l'organigramme de la figure 4.

Cette machine a six états "100" pour ETAT O, "101" pour ETAT 1 , "102" pour ETAT 2, "103" pour ETAT 3, "104" pour ETAT 4, "105" pour ETAT 5.

L'ETAT 0 est un état d'attente d'une commande commençant par un jeton SETUP (10 sur figure 3-a), état aussi appelé "WAIT-SETUP" sur la figure 4.

La machine passe à l'ETAT 1, appelé "SETTING-UP", lorsqu'elle détecte le jeton SETUP (référence 106). Pendant l'ETAT 1, la machine traite les données reçues avec le jeton "SETUP".

Trois cas peuvent en découler :
(a) soit une phase de transfert de données du périphérique B vers l'appareil Maître A correspondant à l'ETAT 2 appelé aussi IN-DATA,
(b) soit une phase de transfert de données de l'appareil Maître A vers le périphérique B correspondant à l'ETAT 3, appelé aussi "OUT-DATA",
(c) soit une fin de commande correspondant à l'ETAT 4, appelé aussi "WAIT-STATUS-IN" qui est une attente de réception d'un jeton IN (référence 104) suivie d'aucune donnée, ce qui conclut la phase de transfert de l'appareil Maître A vers le périphérique B.

Pendant l'ETAT 2 "IN-DATA", le périphérique envoie tous les paquets de données IN vers l'appareil Maître A (boucle 108). Au dernier paquet IN, la machine d'états passe à l'ETAT 5 "WAIT-STATUS-OUT" d'attente du jeton "OUT" (référence 14- figure 3-a).

A la réception du jeton "OUT" (référence 110), la machine d'états revient à l'ETAT 0 d'attente d'un jeton SETUP 106.

Lorsque le jeton "OUT" est détecté dans l'ETAT 2 (référence 111), la machine d'états revient à l'ETAT 0 car il s'agit d'une erreur côté appareil Maître.

Pendant l'ETAT 3 "OUT-DATA", le périphérique reçoit les paquets de données OUT en provenance de l'appareil Maître (boucle 115). Au dernier paquet OUT 113, la machine d'états passe à l'ETAT 4 "WAIT-STATUS-IN" qui permet de revenir à l'ETAT 0 comme indiqué ci-dessus.

La machine d'états retourne directement de l'ETAT 3 à l'ETAT 0 à la réception d'un jeton IN (référence 114) qui correspond à une erreur de l'appareil Maître.

L'invention a pour but de traiter les transitions très rapides d'états entre les états suivants :
ETAT 4, ETAT 0 et ETAT 1 d'une part, et
ETAT 5, ETAT 0 et ETAT 1 d'autre part.

Le cas de la figure 3 illustre le deuxième cas dans lequel un jeton OUT correspondant à une transaction ETAT 5 vers ETAT 0 est suivie par la réception d'un jeton SETUP correspondant à une transaction ETAT 0 vers ETAT 1, ceci sans que le programme ait eu le temps de faire le traitement de la transaction ETAT 5 vers ETAT 0.

Grâce à l'invention, la première transaction ETAT 5 vers ETAT 0 génère une interruption du microcontrôleur de type CTR tandis que la deuxième transaction ETAT 0 vers ETAT 1 génère une interruption SOVR.

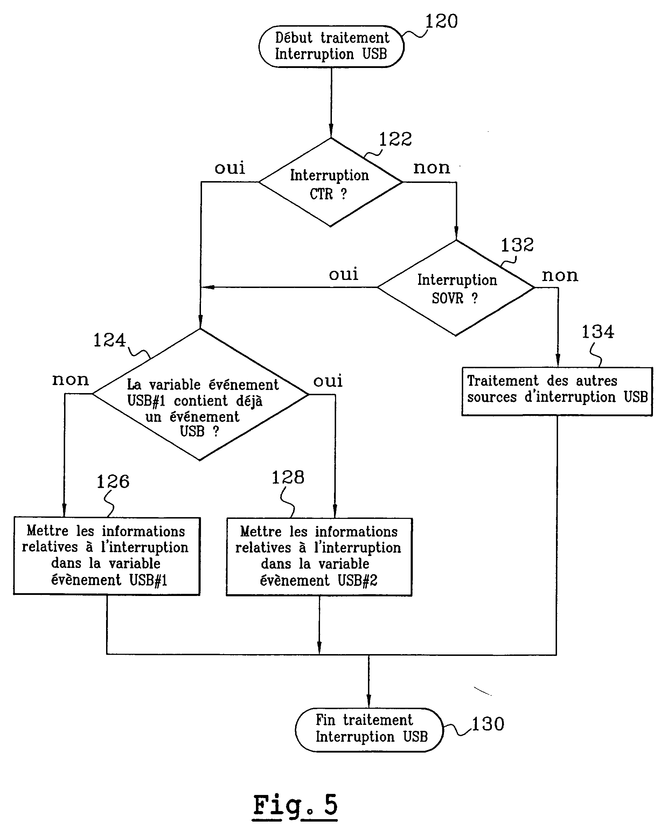

Ces interruptions sont traitées séquentiellement par un programme selon l'organigramme de la figure 5.

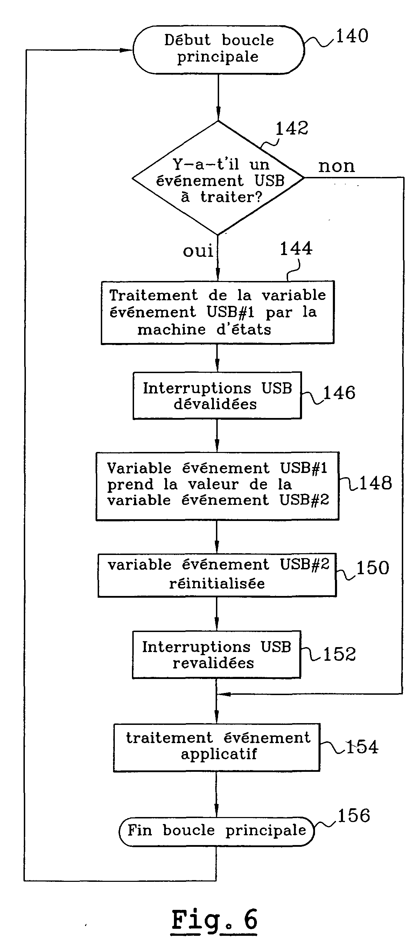

Mais d'abord les informations relatives à l'interruption de type CTR ou SOVR sont stockées dans une variable nommée Evènement USB#1 et si cette variable contient déjà des informations relatives à un Evènement USB précédent, les nouvelles informations seront stockées dans une deuxième variable Evènement USB#2. La gestion des variables Evènements USB#1 et USB#2 est réalisée par la boucle principale du programme selon l'organigramme de la figure 6.

La routine de traitement des interruptions USB comprend les étapes suivantes :
- une étape 120 de début de traitement des interruptions USB ;
- une étape 122 de détection du type d'interruption CTR pour le périphérique considéré ;
- en cas de réponse positive, passage à une étape 124 de détermination si la variable Evènement USB#1 contient déjà un évènement USB ;
- en cas de réponse négative, passage à une étape 126 pour mettre les informations relatives à l'interruption dans la Variable Evènement USB#1 ;
- la routine se termine ensuite par une fin de traitement des interruptions USB correspondant à l'étape 130.

Dans le cas où, lors de l'étape 124, la réponse est positive, ce qui signifie que la variable Evènement USB#1 contient déjà un évènement USB, il y a passage à une étape 128 pour mettre les informations relatives à l'interruption dans la variable Evènement USB#2 ; la routine se termine ensuite par l'étape 130 de fin de traitement des interruptions USB.

Dans le cas où à l'étape 122, la réponse est négative, ce qui signifie que l'interruption n'est pas du type CTR pour le périphérique concerné,il y a alors passage à l'étape 132.

Cette étape 132 permet de déterminer s'il s'agit ou non d'une interruption SOVR générée par le périphérique concerné.

En cas de réponse positive, on passe à l'étape 124 décrite ci-dessus pour déterminer si la variable Evènement USB#1 contient déjà un évènement USB#1.

En cas de réponse négative à l'étape 132, cela signifie qu'il n'y a pas d'interruption SOVR à traiter et il y a passage à une étape 134 de traitement des autres sources d'interruption USB.

Lorsque les autres sources d'interruption sont traitées, il y a passage à l'étape 130 de fin de traitement des interruptions USB.

Pour gérer les deux variables Evènements USB#1 et USB#2, la boucle principale effectue les opérations ou étapes suivantes 140 à 156 de la figure 6.

La boucle principale démarre par l'étape 140 de début de boucle principale et passe à l'étape suivante 142 pour déterminer s'il y a un Evènement USB à traiter.

En cas de réponse négative, il y a passage à l'étape 154 de traitement de l'évènement correspondant à l'application en cours dans le périphérique, puis à la fin de ce traitement, une étape 156 de Fin de Boucle principale qui permet de retourner à l'étape de début 140.

En cas de réponse positive à l'étape 142, il y a passage à l'étape 144 de traitement de la variable Evènement USB#1 par la machine d'états de la figure 4.

A la fin de ce traitement de la variable Evènement USB#1, il y a passage à l'étape 146 durant laquelle les interruptions USB ne sont pas validées, à l'aide d'un masquage du registre d'interruptions par exemple.

L'étape 148 succède à l'étape 146, étape durant laquelle la variable Evènement USB#1 prend la valeur de la variable Evènement USB#2.

La variable Evènement USB#2 est ré-initialisée par l'étape 150 qui est suivie d'une étape 152 d'une revalidation des interruptions USB.

Le fonctionnement du dispositif et du procédé selon l'invention sera décrit dans le cas où l'appareil Maître A commande une lecture de données dans l'appareil Esclave B et le transfert de données lues vers l'appareil Maître A.

Dès la détection d'un jeton SETUP (référence 10, figure 3-a), le signal Setup passe à l'état "1" (figure 3-j) et y reste jusqu'à la fin de la partie 10, c'est-à-dire jusqu'à l'apparition du signal End-trans qui indique l'envoi de l'Accusé-Réception ACK.

Pendant cette durée du signal d'état "1" de Setup, les états des bascules 32R0/32R1 et 32T0/32T1 sont tels que leur décodage correspond à la signification "STALL" (Tableau I) qui interdit toute requête de transmission.

Pendant cette durée de l'état "1" de Setup, les bascules 52R et 52T (DTOG-Rx et DTOG-Tx) sont protégées en écriture grâce au signal d'état Setup appliqué à la borne d'entrée du circuit OU inverseur 62 (figure 2).

Par ailleurs, la bascule DTOG-Tx est passée de l'état "0" à l'état "1" pour indiquer que la donnée à envoyer (IN) est du type DATA 1.

A la fin du signal End-trans qui indique l'envoi de l'Accusé-Réception ACK, le signal d'état CTR=1 passe à l'état 1 pour indiquer l'événement au microcontrôleur.

Ce dernier passe de la routine principale à la routine d'interruption pour effectuer les étapes 120, 122, 124, 126 et 130 (figure 5) puis revient à la routine principale à la fin du signal d'état CTR=1.

Lors de cette boucle principale, le microcontrôleur traite la variable Evènement USB#1 par la machine d'états, c'est-à-dire l'envoi(IN) des données du type DATA 1 car DTOG-Tx = 1 par l'appareil Esclave.

Par contre, DTOG-Rx est passé de l'état "0" à l'état "1" au signal End-trans pour indiquer que les données en réception (OUT) seront du type DATA 1.

Lorsque l'appareil Maître envoie le signal ACK à la fin de la partie 12, le signal End-trans fait passer le signal d'état CTR de "0" à "1", ce qui rend indisponible le microcontrôleur pour la réception de la commande OUT de sorte que l'appareil Esclave retourne une fin de non-recevoir NAK.

Pendant la durée de l'état CTR=1, le microcontrôleur effectue la boucle d'interruption 120, 122, 124, 126 et 130 de sorte que lors du retour à la boucle principale, la machine d'états effectue le traitement en réception des données "OUT" de type DATA 1.

Lors de cette boucle principale, les bascules 32T0 et 32T1 sont mises à l'état "STALL" en émission tandis que les bascules 32R0 et 32R1 sont mises à l'état "ACK" qui signifie qu'elle peut recevoir les données "OUT".

Dès que l'accusé-réception ACK a été envoyé par l'appareil Esclave, un nouveau signal End-trans est généré et le signal d'état CTR passe à l'état "1", ce qui prévient le microcontrôleur qui continue à évoluer dans une autre routine d'interruption retardant le traitement de l'interruption CTR.

Si l'appareil Maître envoie alors une commande de SETUP, le signal Setup passe à l'état "1" (figure 3-j), ce qui protège en écriture les bascules DTOG-Tx et DTOG-Rx (figures 3g et 3h). Cependant, avant cette protection contre une écriture par logiciel le signal End-trans a fait passer DTOG-Rx à l'état "0" (figure 2) ce qui indique que la donnée en réception sera du type DATA0.

Cependant, cette protection de DTOG-Tx et DTOG-Rx contre les écritures par logiciel n'empêche pas un changement d'état par l'intermédiaire des circuits du périphérique et, plus particulièrement, par les multiplexeurs 64R et 64T commandés par le signal Setup et qui reçoit en entrée les signaux "1" pour la bascule 52T et "0" pour la bascule 52R.

Lorsque le jeton SETUP est détecté, l'émetteur/récepteur de l'appareil Esclave reçoit les données DATA et les enregistre à la place des données OUT, ce qui n'a pas de conséquence puisque le jeton "OUT" n'est suivi d'aucune donnée.

Dès que les données DATA de SETUP ont été reçues, l'émetteur/récepteur envoie un signal d'accusé-réception ACK et génère un signal End-trans.

La présence simultanée des signaux Setup=1, End-trans=1 et CTR=1 fournit un signal Setupovr (76, 78 de la figure 2) qui met la bascule 70 à l'état "1" d'où un signal SOVR=1 (figure 3-f).

Dès l'apparition du signal SOVR=1, une routine d'interruption est lancée qui passe par les étapes 120, 122, 132, 124, 128 et 130 (figure 5).

La description ci-dessus définit un procédé de traitement des interruptions dans un appareil Esclave B, tel qu'un périphérique d'ordinateur, qui est connecté à un appareil Maître A, tel qu'un ordinateur, par un câble à plusieurs conducteurs capable de fonctionner selon le protocole dit "USB", caractérisé en ce qu'il comprend les étapes suivantes consistant à :
(a) élaborer un signal d'état CTR indiquant la fin d'un message,
(b) détecter le début 16 d'un nouveau message en provenance de l'appareil Maître et élaborer un signal d'état de début de message Setup,
(c) enregistrer les données contenues dans ce début de message,
(d) accuser réception ACK de ce début de message,
(e) élaborer un signal End-trans indiquant la fin de l'étape précédente (c),
(f) élaborer un signal d'interruption SOVR en présence des signaux de fin de message précédent CTR, de début (Setup) d'un nouveau message et de fin de l'étape (e) End-trans.

## Revendications

1. Dispositif de traitement des interruptions dans un appareil Esclave (B) tel qu'un périphérique d'ordinateur qui est connecté à un appareil Maître (A) tel qu'un ordinateur par l'intermédiaire d'un câble (20) à plusieurs conducteurs pour permettre l'échange d'informations binaires entre les deux appareils selon le protocole USB, ledit appareil Esclave comprenant:
- un circuit d'émission/réception (24) des informations binaires reçues et émises sur le câble (20) qui fournit des signaux (Setup, CTR, End-trans),
- des circuits de commande (30R, 30T, 50R, 50T) de bascules d'états (32R0/32R1, 32T0/32T1, 52R, 52T) recevant les signaux (Setup, CTR, End-trans) du circuit d'émission/réception (24) et fournissant des signaux d'états du circuit d'émission/réception,
- un microcontrôleur (28) pour traiter les applications de l'appareil Esclave et, notamment, les informations binaires reçues et envoyées sur le câble (20), par l'intermédiaire du circuit d'émission/réception **caractérisé en ce que** ledit dispositif de traitement des interruptions comprend un circuit de commande (80) d'une bascule d'état d'interruption (70) de manière à fournir un signal d'interruption (SOVR) lorsque le circuit d'émission/réception (24) a reçu le début (SETUP) d'un nouveau message, ledit début de message ayant été réceptionné (ACK) et enregistré par ledit circuit d'émission/réception.

2. Dispositif selon la revendication 1, **caractérisé en ce que** le circuit de commande de la bascule d'état d'interruption (70) comprend des circuits logiques (74, 76 et 78) qui, recevant les signaux (Setup, End-trans, CTR) du circuit d'émission/réception (24), fournissent un signal (Setupovr) qui met la bascule d'état d'interruption à l'état "1" pour indiquer une requête d'interruption du microprocesseur.

3. Dispositif selon la revendication 1 ou 2, **caractérisé en ce que** les circuits de commande des bascules d'états (32R, 32T, 52R et 52T) comprennent, en outre, des moyens (42, 62) pour empêcher l'écriture dans les bascules d'états (32R0/32R1, 32T0/32T1, 52R et 52T) par le microprocesseur (28) pendant la réception d'un début de message (Setup) et la présence du signal d'interruption (SOVR)

4. Procédé de traitement des interruptions dans un appareil Esclave (B), tel qu'un périphérique d'ordinateur, qui est connecté à un appareil Maître (A), tel qu'un ordinateur, par un câble à plusieurs conducteurs capable de fonctionner selon le protocole dit "USB", **caractérisé en ce qu'**il comprend les étapes suivantes consistant à :
(a) élaborer un signal d'état (CTR) indiquant la fin d'un message,
(b) détecter le début (16) d'un nouveau message en provenance de l'appareil Maître et élaborer un signal d'état de début de message (Setup),
(c) enregistrer les données contenues dans ce début de message,
(d) accuser réception (ACK) de ce début de message,
(e) élaborer un signal (End-trans) indiquant la fin de l'étape précédente (c),
(f) élaborer un signal d'interruption (SOVR) en présence des signaux de fin de message précédent (CTR), de début (Setup) d'un nouveau message et de fin de l'étape (e) (End-trans).
